# EUROPEAN PATENT APPLICATION

(11) **EP 3 208 936 A1**
(43) Date of publication of application: **23.08.2017**
(21) Application number: 16155965.3
(22) Date of filing: 16.02.2016
(51) Int. Cl.: H02P 9/04, H02J 3/38, F02C 9/00

(54) **A GENERATOR CONTROL DEVICE AND METHOD**

(71) Applicant: General Electric Technology GmbH, 5400 Baden (CH)
(72) Inventor: Chan, Kevin Kok Fun, 5400 Baden (CH); Oesterheld, Joerg, 5400 Baden (CH); Walli, Klaus-Dieter, 5400 Baden (CH)
(74) Representative: General Electric Technology GmbH

(57) **Abstract**

The present disclosure relates to a generator control device and a method to control the output power of at least one generator connected to an electric grid. It is an object of the invention to provide a fast solution to counteract electric grid frequency instabilities. This object is solved with the features of a generator control device and a method according to the independent claims. Disclosed is a generator control device and method to control the output power of at least one turbogenerator driven by a turbine connected to an electric grid with a static frequency converter, a frequency measuring device to measure the electric grid frequency *fₑₗ*, and the static frequency converter to operate the turbogenerator in dependency of the measured electric grid frequency *fₑₗ*.

## Description

### TECHNICAL FIELD

The present disclosure relates to a generator control device and a method to control the output power of at least one generator connected to an electric grid.

The generator is a synchronous generator or an asynchronous generator to be connected to a gas or steam turbine, referred to as turbogenerator. The electric grid is commonly the public grid to supply electric energy to households and industry.

### BACKGROUND

Public electric power supply is provided by extensive electric grids. Main systems to provide power are high power generators which feed electric power to the grid, in the following turbogenerators. These turbogenerators are commonly driven by turbines powered by different energy sources, as coal, gas, or wind. It is known to connect turbogenerators, especially those of higher power, to the electric grid by static frequency converters which adapt the generated frequency to the grid frequency. The static frequency converter makes a mechanical gear box with the known disadvantages dispensable. Major objectives in operating the electric grids are to guarantee the reliability, supply security, to improve the grid efficiency, to allow the market efficiency, and to enable the massive integration of renewable energy production into the existing electric grids. In particular the integration of renewable energy leads to operation stability issues due to frequency fluctuations. These challenges cause an increased complexity in system operability. Here, especially the electric grid frequency, fluctuations of the electric grid frequency, and in this context the operating frequency of the connected turbogenerators are considered.

Document US 2010/0032964 A1 discloses a method for operating a power station with turbine shafting including a gas turbine and a turbogenerator that is driven directly by the gas turbine and that generates alternating current with an operating frequency. The output of the turbogenerator is connected to an electrical grid with a given grid frequency. An electronic decoupling apparatus or variable electronic gearbox is arranged between the turbogenerator and the grid. The decoupling apparatus decouples the operating frequency from the grid frequency. In the event of a temporary over-frequency or under-frequency event in the electrical grid, the mechanical rotational speed of the gas turbine is decreased more than the grid frequency during an under-frequency event of the electrical grid and is increased more than the grid frequency during an over-frequency event of the electrical grid. This described method solves several problems in context with electric grid requirements. The method among others ensures a fast response time in the range of a few seconds when the electric grid is in an under-frequency or over-frequency condition. Although this solution disclosed by US 2010/0032964 A1 proved to be reliable and fast the future requirements to such systems and methods might even increase, in particular with regard to speed.

### SUMMARY

It is an object of the invention to provide a fast solution to counteract electric grid frequency instabilities. This object is solved with the features of a generator control device and a method according to the independent claims.

The invention discloses a generator control device to control the output power of at least one turbogenerator driven by a turbine connected to an electric grid with a static frequency converter, a frequency measuring device to measure the electric grid frequency *fₑₗ*, and the static frequency converter (6) to operate the turbogenerator (4) in dependency of the measured electric grid frequency *fₑₗ*.

Further the invention discloses a method to control the output power of at least one turbogenerator driven by a turbine connected to an electric grid with the steps of measuring the electric grid frequency *fₑₗ* and to feed a static frequency converter in dependency of the measured electric grid frequency *fₑₗ*.

The invention particularly allows a faster response of generator operation to electric grid frequency instabilities. Specifically, this invention discloses a control methodology for providing a fast frequency response which lies in the timeframe between synchronous inertial response, which is almost instantaneous, and primary frequency response, which is greater than 2s, of a conventional thermal power plant.

Further examples of the invention are disclosed in the dependent claims.

In one example the turbine and turbogenerator are operated at a speed higher than nominal in case the grid frequency *fₑₗ* exceeds an upper threshold of a target frequency reducing the electrical power delivered to the grid. The turbogenerator is operated at a speed lower than nominal in case the grid frequency *fₑₗ* exceeds a lower threshold of a target frequency increasing the electrical power delivered to the grid. By this means the speed of the turbine generator unit, the turbine and the turbogenerator, is adjusted to provide fast electrical power suitable to the needs of the electric grid.

As a further development the turbine connected to the turbogenerator provides a variable inertial power to the static frequency converter. Here, the turbine provides for the operation speed changes in terms of rotation speed of the shaft.

In another example the generator control device controls the output power of a set of several generators driven by turbines operated by renewable sources and/or low power generation, which generators have high frequency variations. The generator control device is then connected with several generators and steers the output power of all connected generators in a coordinated manner.

In another example from the electric grid frequency *fₑₗ* a reference power is calculated by a converter controller which is fed to the static frequency converter to control the output power. The converter controller receives the signal of the measured frequency *fₑₗ* from the frequency measuring device and transmits a reference power signal to the static frequency converter.

### BRIEF DESCRIPTION OF THE DRAWINGS

Further characteristics and advantages will be more apparent from the description of a preferred but non-exclusive embodiment of the generator control device and method, illustrated by way of non-limiting example in the accompanying drawing, in which:

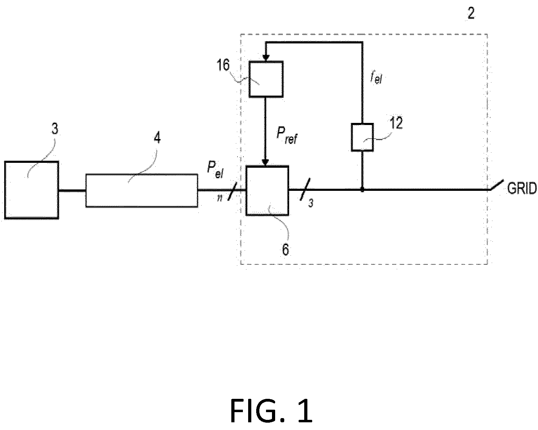

- Fig. 1: shows a schematic block diagram of a generator control device connected to a turbogenerator with turbine and to the electric grid, and a frequency measuring device to transmit the measured grid frequency to a converter controller, which calculates a reference power to adjust a static frequency converter fed with electric power from the turbogenerator.

### DETAILED DESCRIPTION OF EXEMPLARY EMBODIMENTS

Fig. 1 shows a schematic block diagram of a generator control device 2 framed by a dashed line connected to a turbogenerator 4 and a turbine 3. The turbine 3 and turbogenerator 4 are operated with one shaft here and accordingly with the same shaft speed. The turbogenerator 4 is a common generator driven commonly by the turbine 3 in the industrial environment for high power generation. Optional, a multitude of turbogenerators 4 can be connected. The generator control device 2 is connected to an electric grid which is the public grid to supply electric energy on large scale. The turbogenerator 4 is connected to a static frequency converter 6 via power transmission cables and transfers electric power *Pₑₗ* to the static frequency converter 6. Here, the static frequency converter 6 is the converter commonly used for conversion. Alternatively, the generator control device 2 can comprise an additional static frequency converter (not shown) to fulfil the functions described. The power transmission is denoted in Fig. 1 with n for the number of phases generated and transferred. The static frequency converter 6 is a high power device and is described in the state of the art being suitable to adapt the frequency and amplitude of the generated power to the grid requirements. At the grid side at the right in Fig. 1 a frequency measuring device 12 is connected which measures the current frequency *fₑₗ* of the grid. The electric grid has fluctuations due to several parameters which endanger the operation reliability. One essential parameter is the increasing feeding of renewable power into the electric grid. Renewable power generation is less stable, predictable and hence less reliable than conventional power generation. The frequency data of the *fₑₗ* measured by the frequency measuring device 12 is transmitted to a converter controller 16 in this example. The converter controller 16 essentially calculates a reference power *P_{ref}* from the measured frequency *fₑₗ*. To this end the converter controller 16 comprises processors which derive from a target frequency and the measured frequency *fₑₗ* a delta electrical frequency reference. From this delta frequency value the converter controller 16 calculates the corresponding required mechanical reference shaft speed based on predefined fast frequency response requirements of the grid operator. The shaft speed is the speed of the common shaft of the turbogenerator 4 and the turbine 3. The mechanical shaft speed is the factual shaft speed. This mechanical reference shaft speed is the new target speed that the turbogenerator 4 should now be operating at to provide grid frequency support. The signals of the mechanical reference shaft speed and the measured actual shaft speed of the turbogenerator 4 are then used to generate the delta shaft speed signal. The delta shaft speed signal is converted to a reference power *P_{ref}* in the converter controller 16. The reference power *P_{ref}* in turn is the electrical power which is above or below the actual power to be fed to the electric grid by the turbogenerator 4 to support the electric grid during frequency disturbances and to keep the grid in safe operation. The calculated data regarding the reference power *P_{ref}* is transmitted to the static frequency converter 6. The converter controller 16 switches the static frequency converter 6 on basis of the reference power *P_{ref}*. In case the grid frequency *fₑₗ* is higher than a target or reference frequency of the electric grid the reference power *P_{ref}* is calculated so that less electrical power is delivered to the grid. In particular, the converter controller 16 observes whether an upper or lower threshold of the measured grid frequency *fₑₗ* is exceeded. These thresholds are determined by specific grid requirements. The measure is then to reduce electric power injected into the electric grid and thus to decrease the grid frequency. In this example this is done by the turbogenerator 4 which is connected to the static frequency converter 6 and to the electric grid. The converter controller 16 triggers the static frequency converter 6 to reduce the electric power *Pₑₗ* of the turbogenerator 4 which correlates to the reference power *P_{ref}*. This means a reduction of electrical power but the turbine mechanical power remaining unchanged, the speed of the turbogenerator 4 and turbine 3 will increase. The electric power *Pₑₗ* generated by the turbogenerator 4 is switched by the static frequency converter 6 to the electric grid. The such lowered power supply to the electric grid by the static frequency converter 6 results in a reduction of the grid frequency to a certain extent depending on the grid capacity. In the contrary case when the grid frequency *fₑₗ* is lower than a target or reference frequency of the electric grid the reference power *P_{ref}* is calculated so that more electrical power is delivered to the grid. The measure is then to add electric power to the electric grid and thus to increase the grid frequency, in particular in case the grid frequency falls below a lower threshold. The electric power *Pₑₗ* is increased in the static frequency converter 6 to this end by the value calculated with *P_{ref}*. The needed power increase is triggered by the converter controller 16 which initiates a reduction in the mechanical shaft speed of the turbine 3 and the turbogenerator 4. The electrical power level supplied to the electric grid is increased in this manner. Correspondingly, the grid frequency is increased to safeguard a secure grid operation. A main property of the described generator control device 2 is the fast reaction time in the range of only one second or less. This fast reaction to grid frequency disturbances facilitates an improved stability. The fast reaction time of the generator control device 2 and method mainly bases on the fact that the time delay to take effect to the electric grid depends on time for the frequency measurement. This differentiates the generator control device 2 and method from the state of the art solutions.

While the invention has been described in detail with reference to exemplary embodiments thereof, it will be apparent to one skilled in the art that various changes can be made, and equivalents employed, without departing from the scope of the invention. The foregoing description of one example of the invention has been presented for purposes of illustration and description. It is not intended to be exhaustive or to limit the invention to the precise form disclosed, and modifications and variations are possible in light of the above teachings or may be acquired from practice of the invention. The embodiment is chosen and described in order to explain the principles of the invention and its practical application to enable one skilled in the art to utilize the invention. It is intended that the scope of the invention be defined by the claims appended hereto, and their equivalents.

### REFERENCE NUMBERS

- 2: generator control device
- 3: turbine
- 4: turbogenerator
- 6: static frequency converter
- 12: frequency measuring device
- 16: converter controller

## Claims

1. A generator control device (2) to control the output power of at least one turbogenerator (4) driven by a turbine (3) connected to an electric grid with a static frequency converter (6), a frequency measuring device (12) to measure the electric grid frequency *fₑₗ*, and the static frequency converter (6) to operate the turbogenerator (4) in dependency of the measured electric grid frequency *fₑₗ*.

2. The generator control device (2) according to claim 1, **characterized in that** the turbogenerator (4) is operated at a speed higher than nominal speed in case the grid frequency *fₑₗ* exceeds an upper threshold of a target frequency and that the turbogenerator (4) is operated at a speed lower than nominal speed in case the grid frequency *fₑₗ* exceeds a lower threshold of a target frequency.

3. The generator control device (2) according to claim 2, **characterized in that** the turbine (3) connected to the turbogenerator (4) provides a variable inertial power to the static frequency converter (6).

4. The generator control device (2) according to one of the foregoing claims, **characterized in that** the generator control device (2) controls the output power of a set of several turbogenerators (4) driven by turbines (3) operated by renewable sources and/or low power generation, which generators (4) have high frequency variations.

5. The generator control device (2) according to one of the foregoing claims, **characterized in that** from the electric grid frequency *fₑₗ* a reference power *P_{ref}* is calculated by a converter controller (16) which is fed to the static frequency converter (6) to control the output power.

6. A method to control the output power of at least one turbogenerator (4) driven by a turbine connected to an electric grid with the steps of measuring the electric grid frequency *fₑₗ* and to feed a static frequency converter (6) in dependency of the measured electric grid frequency *fₑₗ*.

7. The method to control the output power of at least one turbogenerator (4) according to claim 6, **characterized in** operating the turbogenerator (4) at a speed higher than nominal in case the grid frequency *fₑₗ* exceeds an upper threshold of a target frequency and operating the turbogenerator (4) at a speed lower than nominal in case the grid frequency *fₑₗ* exceeds a lower threshold of a target frequency.
